# EUROPEAN PATENT APPLICATION

(11) **EP 4 456 239 A1**
(43) Date of publication of application: **30.10.2024**
(21) Application number: 24165029.0
(22) Date of filing: 21.03.2024
(51) Int. Cl.: H01M 10/0562, H01M 10/48, H01M 50/242, H01M 50/342

(54) **BATTERY SYSTEM AND ABNORMALITY SENSING METHOD FOR BATTERY SYSTEM**

(30) Priority: 28.04.2023 JP 2023074406
(71) Applicant: TOYOTA JIDOSHA KABUSHIKI KAISHA, Aichi-ken 471-8571 (JP)
(72) Inventor: HAGIWARA, Hideki, Toyota-shi, 471-8571 (JP); NAGASE, Hiroshi, Toyota-shi, 471-8571 (JP); OGUMA, Yasumasa, Toyota-shi, 471-8571 (JP); YOSHIDA, Jun, Toyota-shi, 471-8571 (JP); MIGITA, Tsubasa, Toyota-shi, 471-8571 (JP); UCHIDA, Yoshihiro, Toyota-shi, 471-8571 (JP)
(74) Representative: D Young & Co LLP

(57) **Abstract**

A battery system includes at least one pack (222) in which an all-solid-state battery cell (221) is sealed, and a sensing unit (150, 240) configured to sense deformation of the at least one pack (222) due to change in internal pressure of the at least one pack (222).

## Description

### BACKGROUND OF THE INVENTION

### 1. Field of the Invention

The present disclosure relates to a battery system and an abnormality sensing method for the battery system.

### 2. Description of Related Art

Japanese Unexamined Patent Application Publication No. 2022-046077 (JP 2022-046077 A) discloses a configuration in which concentration and so forth of hydrogen sulfide created in an all-solid-state battery inside a battery case is sensed by a sensor disposed inside the battery case.

### SUMMARY OF THE INVENTION

However, with the configuration of JP 2022-046077 A, sensing the hydrogen sulfide being created is difficult unless a certain amount or more of hydrogen sulfide flows out into the battery case. As such, there is demand for a system that can quickly sense creation of gasses such as hydrogen sulfide and so forth in all-solid-state batteries.

The present disclosure provides a battery system and an abnormality sensing method for the battery system that can quickly sense gas being created in an all-solid-state battery.

A battery system according to a first aspect of the present disclosure includes at least one pack in which an all-solid-state battery cell is sealed, and a sensing unit configured to sense deformation of the at least one pack due to change in internal pressure of the at least one pack.

In the battery system according to the first aspect of the present disclosure, deformation of the at least one pack due to a change in the internal pressure of the at least one pack is sensed, as described above. This enables sensing of gasses being created to be performed more easily, even when the amount of gas created is small, as compared to when sensing the creation of hydrogen sulfide based on concentration and so forth of hydrogen sulfide in a battery case that has a sufficiently large capacity as compared to the at least one pack, for example. As a result, gas being created in the all-solid-state battery cell can be quickly sensed.

In the battery system according to the first aspect of the present disclosure, the at least one pack may include a plurality of packs. The sensing unit may be configured to sense deformation of each of the packs. Now, when sensing the concentration and so forth of hydrogen sulfide in a battery case that accommodates multiple packs, judging which of the packs is creating hydrogen sulfide is difficult. In contrast, the configuration described above enables whether each of the packs is deformed to be sensed. As a result, which pack out of the packs is creating gas can be easily sensed.

In the battery system according to the first aspect of the present disclosure, the sensing unit may be configured to sense deformation of the at least one pack, in a non-contact state with the at least one pack. According to this configuration, the sensing unit can be suppressed from receiving pressure from the at least one pack when the at least pack is deformed, unlike the case in which the sensing unit is in contact with the at least one pack. As a result, deterioration of the sensing unit can be suppressed.

In the battery system according to the first aspect of the present disclosure, the sensing unit may include an imaging unit. The sensing unit may be configured to detect deformation of the at least one pack, based on an image of the at least one pack imaged by the imaging unit. According to this configuration, deformation of the at least one pack can be easily sensed using the image.

In the battery system according to the first aspect of the present disclosure, the at least one pack may include a discharge valve that is configured to discharge gas when the internal pressure is no lower than a predetermined value. The sensing unit may be configured to sense deformation of the at least one pack based on the image indicating that the discharge valve is open. According to this configuration, the creation of gas can be sensed more reliably than when the creation of gas is detected based only on expansion of the at least pack.

In the battery system according to the first aspect of the present disclosure, the at least one pack may include an array of packs arrayed in a predetermined direction. The imaging unit may be configured to move in the predetermined direction. According to this configuration, the imaging unit can be brought close to each of the packs. As a result, detailed images of each of the packs can be obtained.

In the battery system according to the first aspect of the present disclosure, the sensing unit may include a strain gauge. The strain gauge may be attached in a state of contact with a portion of the at least one pack. The portion of the at least one pack may be configured to deform due to change in the internal pressure. According to this configuration, deformation of the at least one pack can be easily sensed based on change in strain in the at least one pack.

In the battery system according to the first aspect of the present disclosure, the sensing unit may include a pressure sensor. The pressure sensor may be provided in a portion of the at least one pack. The portion of the at least one pack may be configured to deform due to change in the internal pressure. According to this configuration, deformation of the at least one pack can be easily sensed based on change in pressure from the at least one pack that the pressure sensor is subjected to.

An abnormality sensing method according to a second aspect of the present disclosure, for a battery system equipped with an all-solid-state battery cell, includes preparing a pack in which the all-solid-state battery cell is sealed, and sensing deformation of the pack due to change in internal pressure of the pack.

According to the abnormality sensing method for a battery system according to the second aspect of the present disclosure, deformation of the pack due to a change in the internal pressure of the pack is detected, as described above. This enables an abnormality sensing method for a battery system to be provided that can quickly sense gas being created in an all-solid-state battery.

A battery system according to a third aspect of the present disclosure includes a pack in which an all-solid-state battery cell is sealed, and a processor configured to determine sensing of deformation of the pack due to change in internal pressure of the pack.

According to the present disclosure, creation of gas such as hydrogen sulfide and so forth in an all-solid-state battery can be quickly sensed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of an electrified vehicle including a battery system according to a first embodiment;
FIG. 2 is a schematic diagram illustrating a battery according to the first embodiment;
FIG. 3 is a cross-sectional view of an all-solid-state battery;
FIG. 4A is a diagram relating to deformation of a pack according to the first embodiment;
FIG. 4B is a diagram relating to deformation of the pack according to the first embodiment;
FIG. 4C is a diagram relating to deformation of the pack according to the first embodiment;
FIG. 5 is a diagram showing a method for abnormality sensing in the battery system according to the first embodiment;
FIG. 6 is a diagram illustrating a screen that performs notification of creation of hydrogen sulfide;
FIG. 7 is a diagram illustrating a configuration of a battery system according to a second embodiment;
FIG. 8A is a diagram relating to deformation of a pack and a strain gauge according to the second embodiment;
FIG. 8B is a diagram relating to deformation of the pack and the strain gauge according to the second embodiment;
FIG. 9 is a diagram showing an abnormality sensing method for the battery system according to the second embodiment;
FIG. 10A is a diagram relating to deformation of a pack and a pressure sensor according to a modification of the second embodiment; and
FIG. 10B is a diagram relating to deformation of the pack and the pressure sensor according to the modification of the second embodiment.

### DETAILED DESCRIPTION OF EMBODIMENTS

Embodiments of the present disclosure will be described in detail below with reference to the drawings. Note that the same or corresponding portions are denoted by the same signs throughout the drawings, and description thereof will not be repeated.

### First Embodiment

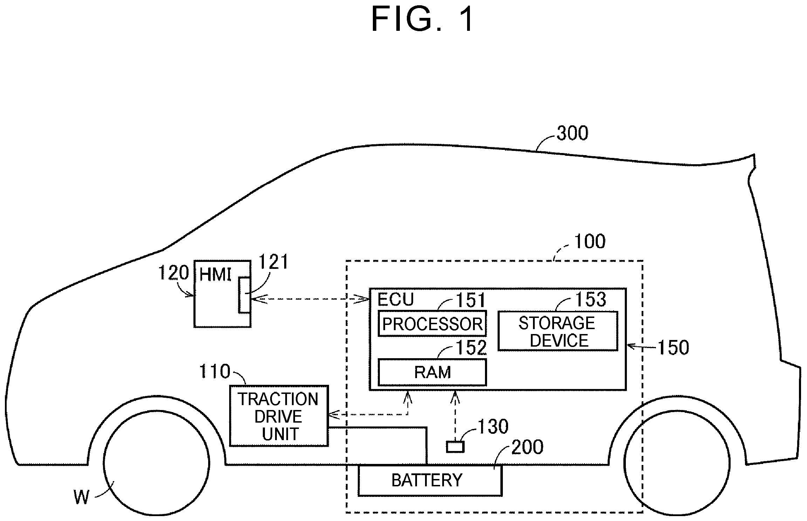

FIG. 1 is a diagram schematically illustrating an overall configuration of an electrified vehicle 300 that is equipped with a battery system 100 according to a first embodiment. The battery system 100 includes a monitoring module 130, a battery 200, and an electronic control unit (ECU) 150, each of which will be described later.

The electrified vehicle 300 is configured to be capable of traveling using electric power stored in the battery 200. In the first embodiment, the electrified vehicle 300 is a battery electric vehicle (BEV) that is not equipped with an engine (internal combustion engine), but may be a hybrid electric vehicle (HEV) or a plug-in hybrid electric vehicle (PHEV) that is equipped with an engine. Note that the battery 200 is charged (externally charged) with electric power supplied from a charging facility.

The ECU 150 is configured to perform charge control and discharge control of the battery 200. The ECU 150 includes a processor 151, random access memory (RAM) 152, and a storage device 153.

The ECU 150 may be a computer. The processor 151 may be a central processing unit (CPU).

The RAM 152 functions as working memory for temporarily storing data that is processed by the processor 151.

The storage device 153 is configured to be capable of saving the information that has been temporarily stored. The storage device 153 stores programs, and also information to be used by the programs (e.g., maps, mathematical expressions, and various types of parameters). Various types of control in the ECU 150 are executed by the processor 151 executing the programs stored in the storage device 153.

The monitoring module 130 includes various types of sensors that detect a state (e.g., voltage, current, and temperature) of the battery 200, and outputs detection results thereof to the ECU 150. The monitoring module 130 may be a battery management system (BMS) that, in addition to the above sensor functions, further has a state of charge (SOC) estimation function, a state of health (SOH) estimation function, a cell voltage equalization function, a diagnostic function, and a communication function. The ECU 150 can acquire the state (e.g., temperature, current, voltage, SOC, and internal resistance) of the battery 200 based on the output of the monitoring module 130. Here, the processor 151 senses deformation of each of a plurality of packs 222 due to change in internal pressure of each of the packs 222.

The electrified vehicle 300 further includes a traction drive unit 110, a human machine interface (HMI) device 120, and drive wheels W.

The traction drive unit 110 includes a power control unit (PCU) and a motor generator (MG), both omitted from illustration, and is configured to cause the electrified vehicle 300 to travel by electric power stored in the battery 200.

The PCU includes, for example, an inverter, a converter, and a relay (hereinafter referred to as "system main relay (SMR)"). The PCU is controlled by the ECU 150.

For example, the MG is a three-phase alternating current motor generator. The MG is configured to be driven by the PCU to rotate the drive wheels W. The PCU drives the MG using electric power supplied from the battery 200. The MG is also configured to regeneratively generate electric power and supply the electric power that is generated to the battery 200.

The SMR is configured to switch between connecting/disconnecting of an electric power path from the battery 200 to the PCU. The SMR is in a closed state (connected state) when the electrified vehicle 300 is traveling.

The HMI device 120 includes an input device and a display device. The HMI device 120 may include a touch panel display 121.

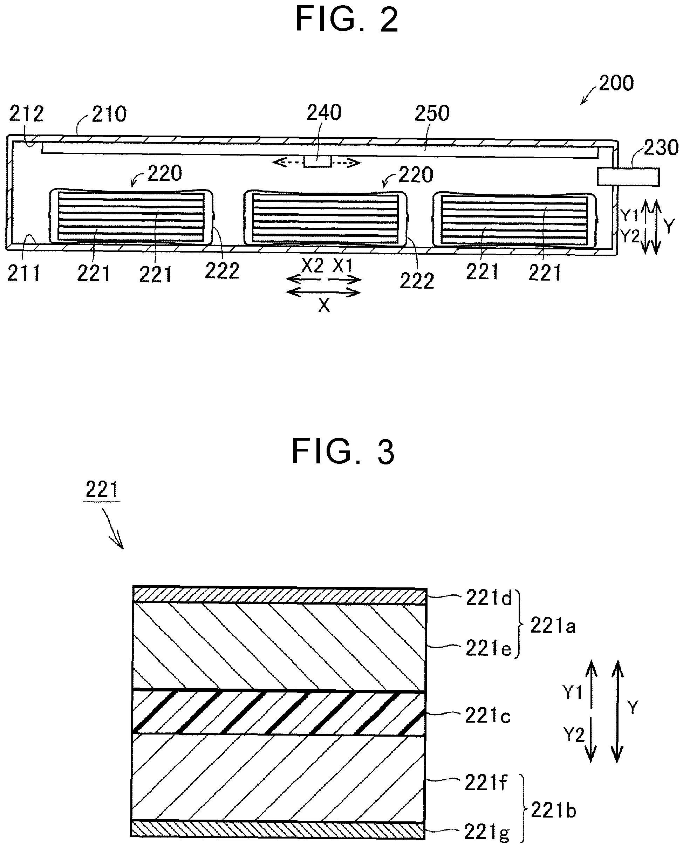

FIG. 2 is a schematic cross-sectional view of the battery 200. The battery 200 includes a battery case 210, a plurality of battery modules 220, an exhaust pipe 230, a camera 240, and a moving mechanism 250. Each of the battery modules 220, the camera 240, and the moving mechanism 250 is accommodated in the battery case 210. Note that while FIG. 2 illustrates an example in which three battery modules 220 are provided, the number of battery modules 220 is not limited to the above example. Further, the camera 240 is an example of "imaging unit" according to the present disclosure. Furthermore, the camera 240 and the ECU 150 are each included in "sensing unit" according to the present disclosure.

The battery modules 220 are disposed arrayed in an X direction illustrated in FIG. 2 within the battery case 210. Note that the battery modules 220 are disposed apart from each other.

Each of the battery modules 220 is disposed on a bottom face 211 of the battery case 210. Each of the battery modules 220 includes a plurality of all-solid-state battery cells 221 and a pack 222. Each of the all-solid-state battery cells 221 is a sulfide-based all-solid-state battery, which will be described with reference to FIG. 3. The all-solid-state battery cells 221 in each of the battery modules 220 are stacked in a Y direction illustrated in FIG. 2. Note that the Y direction is a direction orthogonal to the X direction.

The pack 222 encloses and accommodates the all-solid-state battery cells 221 that are stacked on each other. Thus, the all-solid-state battery cells 221 are sealed by the pack 222. Note that the pack 222 is a laminate-type pack (pouch made of metal foil laminate film). The pack 222 deforms (e.g., expands) when internal pressure therein increases due to hydrogen sulfide being created.

The exhaust pipe 230 is provided so as to extend from the inside of battery case 210 to the outside. The exhaust pipe 230 discharges hydrogen sulfide inside the battery case 210 to the outside of the battery case 210.

The camera 240 performs imaging of each of the battery modules 220. The camera 240 performs imaging of each of the battery modules 220 (packs 222) in a non-contact state with each of the battery modules 220. Images of each of the battery modules 220 acquired by the camera 240 are transmitted to the ECU 150 (see FIG. 1).

The moving mechanism 250 is attached to, for example, a ceiling face 212 of the battery case 210, which faces the bottom face 211 of the battery case 210. The moving mechanism 250 is configured to move the camera 240 in the X direction. Specifically, the moving mechanism 250 can move the camera 240 to positions facing each of the battery modules 220 (in the Y direction). This enables the camera 240 to be brought close to each of the battery modules 220, and acquire images thereof.

The moving mechanism 250 may automatically move the camera 240 at predetermined cycles. The moving mechanism 250 may move the camera 240 in accordance with a command from the ECU 150. Also, the moving mechanism 250 may move the camera 240 based on a command (operation) from a user via the HMI device 120, a mobile terminal that is omitted from illustration, or the like. Note that the moving mechanism 250 may be configured to move the camera 240 not only in the X direction but also two-dimensionally along the ceiling face 212, and may be configured to move the camera 240 in the Y direction.

### All-Solid-State Battery

FIG. 3 is a diagram schematically illustrating a configuration of the all-solid-state battery cell 221. The all-solid-state battery cell 221 includes an positive electrode layer 221a, a negative electrode layer 221b, and a solid-state electrolyte layer 221c as electric power storage elements. The all-solid-state battery cell 221 may include an outer encasement (omitted from illustration) for housing the electric power storage elements. The outer encasement is, for example, a pouch made of metal foil laminate film.

### Positive electrode Layer

The positive electrode layer 221a includes a positive electrode active material layer 221e and a positive electrode current collector 221d. The positive electrode active material layer 221e is formed by coating a surface of the positive electrode current collector 221d with a positive electrode slurry (slurry prepared by kneading material of the positive electrode active material layer 221e and a solvent), and performing drying thereof. The positive electrode active material layer 221e is in close contact with the solid-state electrolyte layer 221c. A thickness of the positive electrode active material layer 221e is, for example, 0.1 µm or more and 1000 µm or less.

### Negative electrode Layer

The negative electrode layer 221b includes a negative electrode active material layer 221f and a negative electrode current collector 221g. The negative electrode active material layer 221f is formed by coating a surface of the negative electrode current collector 221g with a negative electrode slurry (slurry prepared by kneading the material of the negative electrode active material layer 221f and a solvent), and performing drying thereof. The negative electrode active material layer 221f is in close contact with the solid-state electrolyte layer 221c. A thickness of the negative electrode active material layer 221f is, for example, 0.1 µm or more and 1000 µm or less.

### Solid-State Electrolyte Layer

The solid-state electrolyte layer 221c is interposed between the positive electrode layer 221a and the negative electrode layer 221b. The solid-state electrolyte layer 221c separates the positive electrode layer 221a from the negative electrode layer 221b. A thickness of the solid-state electrolyte layer 221c is, for example, 0.1 µm or more and 1000 µm or less.

Also, the positive electrode layer 221a, the solid-state electrolyte layer 221c, and the negative electrode layer 221b are stacked in the direction in which the all-solid-state battery cells 221 are stacked (Y direction). In the example illustrated in FIG. 3, the positive electrode layer 221a is provided on a Y1 side of the solid-state electrolyte layer 221c, and the negative electrode layer 221b is provided on a Y2 side (opposite side from Y1) of the solid-state electrolyte layer 221c. Note that a position of the positive electrode layer 221a and a position of the negative electrode layer 221b may be opposite to those illustrated in FIG. 3.

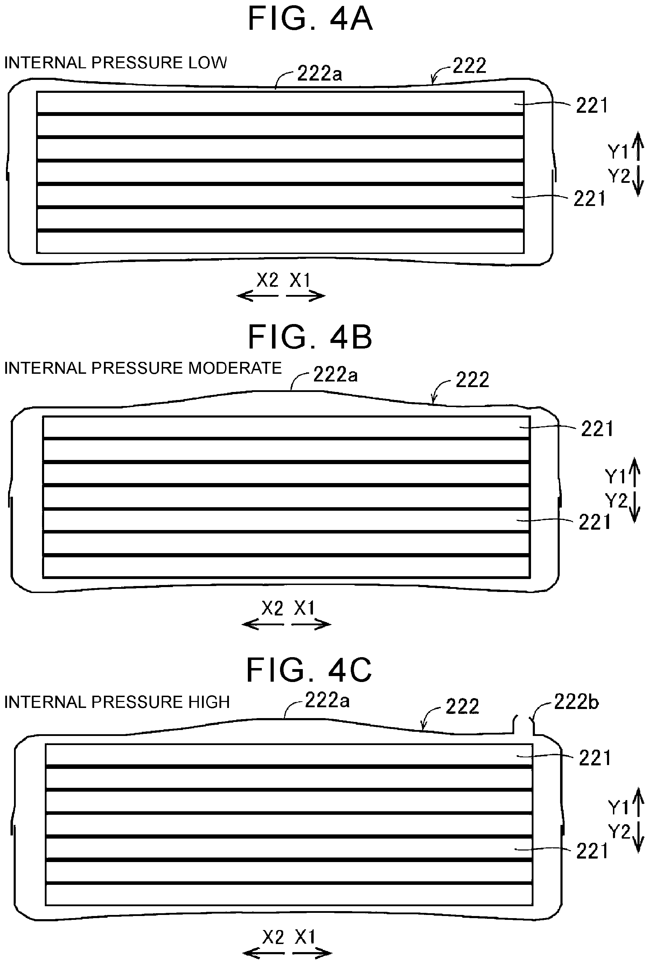

FIGS. 4A to 4C are diagrams showing how the pack 222 deforms in response to change in internal pressure of the pack 222.

FIG. 4A is a diagram of when internal pressure of the pack 222 is low because hydrogen sulfide is not being created in the all-solid-state battery cell 221 (or the amount being created is small). In this case, the pack 222 is not deformed.

FIG. 4B is a diagram of when internal pressure of the pack 222 is moderate due to hydrogen sulfide being created in the all-solid-state battery cell 221. In this case, the portion 222a of the pack 222 changes so as to expand. Note that the internal pressure of the pack 222 in this case is lower than a threshold value described later. Note that the portion 222a is provided in a middle portion of the Y1 side (camera 240 side) face of the pack 222 in the X direction. The portion 222a is a portion formed to be expandable as internal pressure of the pack 222 increases. For example, the portion 222a is a portion that is formed to be slightly slack in a state in which hydrogen sulfide is not being created. Also, the portion 222a may be a portion that has lower rigidity than the portions of the pack 222 other than the portion 222a.

FIG. 4C is a diagram of when internal pressure of the pack 222 is high due to hydrogen sulfide being created in the all-solid-state battery cell 221. In this case, in addition to expansion of the portion 222a of the pack 222, an exhaust valve 222b of the pack 222 opens. The exhaust valve 222b has a function of discharging hydrogen sulfide from the pack 222. The exhaust valve 222b is configured to open when internal pressure of the pack 222 is no lower than the threshold value. The exhaust valve 222b is provided, for example, at an X1 side end portion of the Y1 side (camera 240 side) face of the pack 222.

Now, there is a battery system in which creation of hydrogen sulfide is sensed by disposing a sensor for detecting hydrogen sulfide in the battery case. In this case, sensing the hydrogen sulfide being created is difficult unless a certain amount or more of hydrogen sulfide flows out into the battery case. As such, there is demand for a system that can quickly sense creation of hydrogen sulfide in all-solid-state batteries.

Here, in the first embodiment, the ECU 150 senses deformation of the pack 222 due to change in internal pressure of the pack 222. Specifically, the ECU 150 determines whether the pack 222 is deformed, based on an image of the pack 222 that is imaged by the camera 240. Note that the ECU 150 senses deformation of each of the packs 222 based on images of each of the packs 222 imaged by the camera 240.

Specifically, when the ECU 150 senses that the portion 222a of the pack 222 (see FIG. 4A) is expanded, based on the image of the pack 222, the ECU 150 determines that the pack 222 is deformed. Also, when the ECU 150 senses that the exhaust valve 222b of the pack 222 (see FIG. 4C) is open, based on the image of the pack 222, the ECU 150 determines that the pack 222 is deformed.

For example, the storage device 153 of the ECU 150 stores an image of the pack 222 when no hydrogen sulfide is being created (see FIG. 4A). The ECU 150 (processor 151) determines whether the pack 222 is deformed by comparing the image stored in the storage device 153 with the image of the pack 222 acquired by the camera 240. Also, a trained model, generated by machine learning technology such as deep learning or the like, for example, may be used in the above-described determination processing.

### Abnormality Sensing Method for Battery System

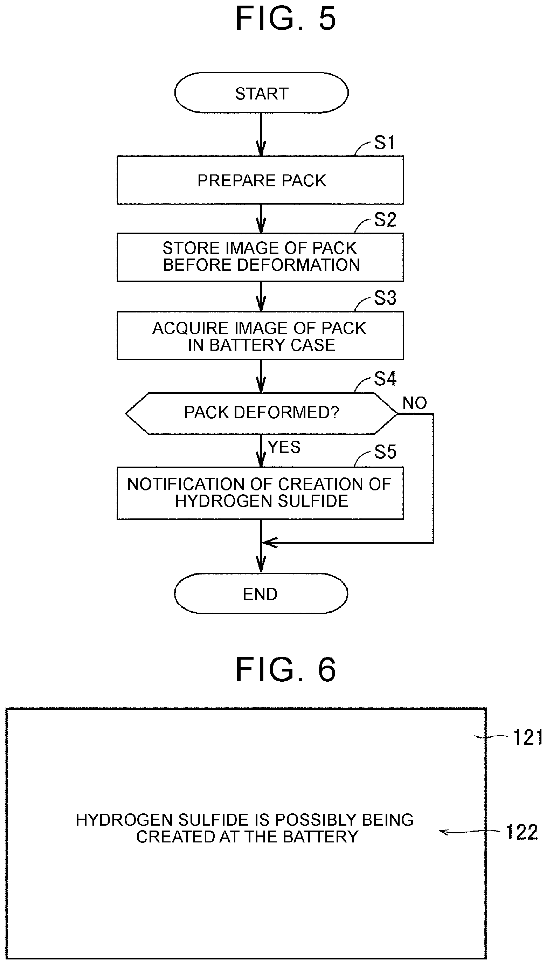

Next, an abnormality sensing method for the battery system 100 will be described with reference to FIGS. 5 and 6. Note that the following steps S3 to S5 are continuously repeated at predetermined cycles.

In step S 1, the pack 222 is prepared. Specifically, the battery module 220, in which the all-solid-state battery cells 221 are sealed by the pack 222, is prepared. In step S2, an image of the pack 222 before deformation (see FIG. 4A) is stored in the storage device 153 (see FIG. 1). Note that the processes of steps S 1 and S2 are processes performed during the manufacturing stage of the electrified vehicle 300. The processing of the following steps S3 to S5 are performed while the electrified vehicle 300 is being used by the user.

In step S3, the camera 240 acquires an image of each of the packs 222 within the battery case 210. The camera 240 may sequentially (one by one) perform imaging of the packs 222 while being moved by the moving mechanism 250. Further, the camera 240 may have a wide angle of view so that multiple packs 222 can be imaged at the same time.

In step S4, the ECU 150 determines whether the pack 222 is deformed. Specifically, the ECU 150 compares the image of the pack 222 before deformation, which is stored in the storage device 153 in step S2, and the image of the pack 222 acquired in step S3. Based on the above comparison, the ECU 150 determines that the pack 222 is deformed when at least one of expansion of the portion 222a of the pack 222, and opening of the exhaust valve 222b, is sensed. When determination is made that the pack 222 is deformed (Yes in S4), the processing advances to step S5. When determination is made that the pack 222 is not deformed (No in S4), the processing ends.

In step S5, the ECU 150 notifies the user of the electrified vehicle 300 of the creation of hydrogen sulfide. For example, as illustrated in FIG. 6, the ECU 150 causes the touch panel display 121 of the HMI device 120 to display a message 122 that says "Hydrogen sulfide is possibly being created at the battery." Note that instead of (or in addition to) displaying the message 122, notification by audio may be performed. Also, the ECU 150 may transmit a signal that causes a mobile terminal or the like, that is omitted from illustration, of the user to perform the above notification.

As described above, in the present embodiment, the ECU 150 senses deformation of the pack 222 due to change in internal pressure of the pack 222, based on the image acquired by the camera 240. Thus, creation of hydrogen sulfide can be sensed more quickly than when hydrogen sulfide discharged from the pack 222 into the battery case 210 is directly detected. As a result, hydrogen sulfide can be suppressed from being discharged into the battery case 210.

### Second Embodiment

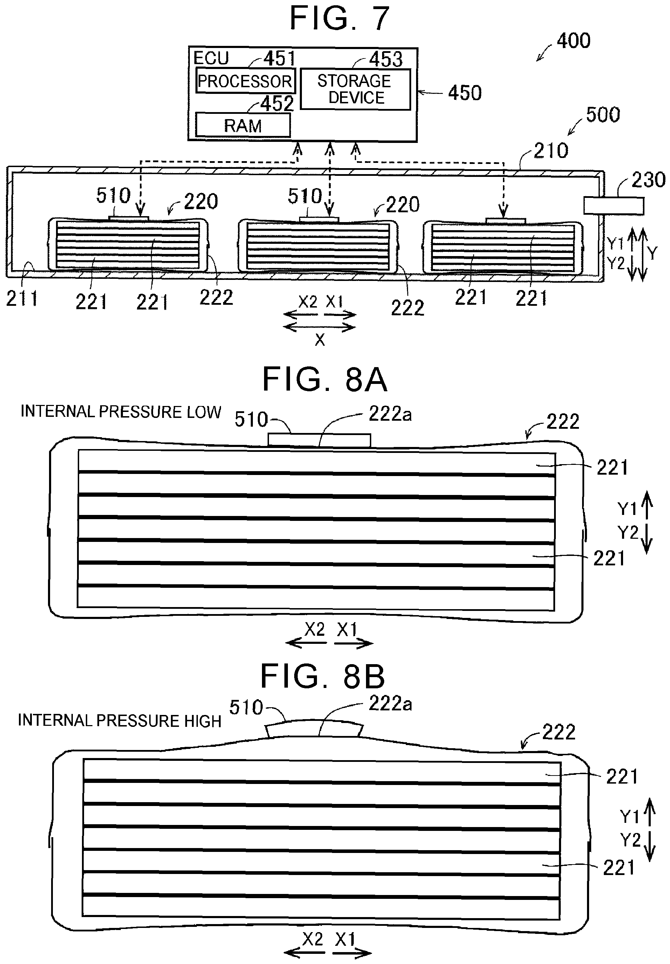

A second embodiment of the present disclosure will be described with reference to FIGS. 7 to 9. In the second embodiment, a strain gauge 510 is used to sense deformation of the pack 222. Components that are the same as those of the first embodiment described above are denoted by the same signs, and description thereof will not be repeated.

FIG. 7 is a diagram schematically illustrating a configuration of a battery system 400 according to the second embodiment. The battery system 400 includes a battery 500 and an ECU 450.

The ECU 450 is configured to perform charge control and discharge control of the battery 500. The ECU 450 includes a processor 451, RAM 452, and a storage device 453.

The battery 500 differs from the battery 200 according to the first embodiment, with regard to the point of including a strain gauge 510 instead of the camera 240 and the moving mechanism 250 (see both in FIG. 2). The strain gauge 510 is attached to each of the packs 222. Data regarding the amount of strain detected by the strain gauge 510 is transmitted to the ECU 450. Note that the strain gauge 510 and the ECU 450 are each included in "sensing unit" according to the present disclosure.

As illustrated in FIG. 8A, the strain gauge 510 is attached in a state of contact with the portion 222a of the pack 222. For example, the strain gauge 510 is fixed to the portion 222a by being bonded thereto using an adhesive agent or the like. When the internal pressure of the pack 222 is low and the pack 222 is not deformed, the amount of strain detected by the strain gauge 510 is zero.

When the portion 222a expands due to hydrogen sulfide (see FIG. 8B), the strain detected by the strain gauge 510 becomes greater than zero. The ECU 450 determines that the pack 222 is deformed when the amount of strain detected by the strain gauge 510 is no lower than a threshold value.

### Abnormality Sensing Method for Battery System

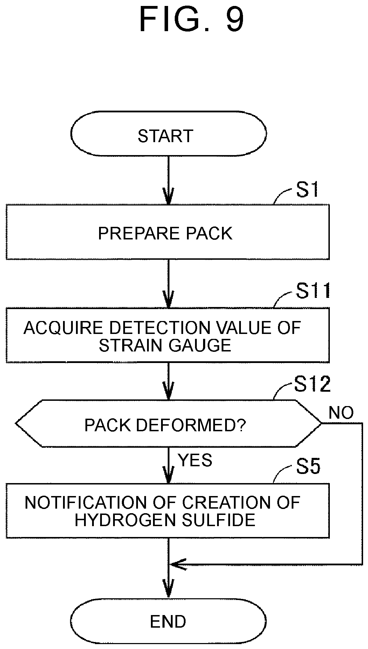

Next, an abnormality sensing method for the battery system 400 will be described with reference to FIG. 9. Note that the same processes as in the first embodiment will not be described in detail again. The following steps S11, S12, and S5 are performed while the electrified vehicle is being used by the user, and are continuously repeated at predetermined cycles.

In step S11 following step S1, the ECU 450 acquires data regarding a detected value (strain amount) of the strain gauge 510 attached to each pack 222.

In step S12, the ECU 450 determines whether the pack 222 is deformed. Specifically, the ECU 450 determines that pack 222 is deformed when the detected value of the strain gauge 510 acquired in step S11 is no less than the threshold value. When determination is made that the pack 222 is deformed (Yes in S12), the processing advances to step S5. When determination is made that the pack 222 is not deformed (No in S12), the processing ends.

Other configurations and effects are the same as those of the above first embodiment, and accordingly repetitive description will not be made.

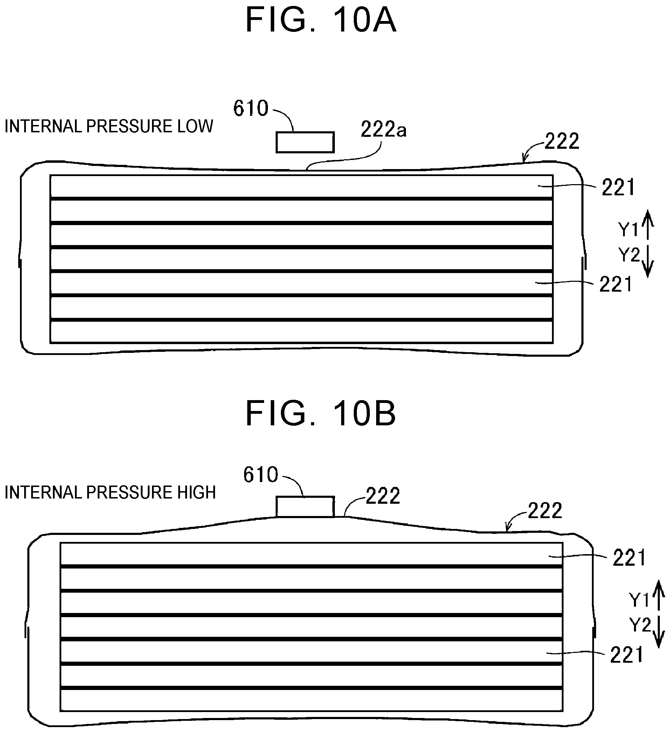

Although the second embodiment described above illustrates an example in which the strain gauge 510 is provided in the portion 222a of the pack 222, the present disclosure is not limited to this. As illustrated in FIGS. 10A and 10B, a pressure sensor 610 may be provided corresponding to the portion 222a. Note that the pressure sensor 610 is provided in each portion 222a of the packs 222.

Specifically, as illustrated in FIG. 10A, the pressure sensor 610 is provided away from the portion 222a of the pack 222 when in a state of not being deformed. In other words, the pressure sensor 610 is provided adjacent to (opposed to) the portion 222a of the pack 222 when in a state of not being deformed. The pressure sensor 610 may be fixed to, for example, the ceiling face 212 (see FIG. 2) of the battery case 210.

Then, as illustrated in FIG. 10B, the pressure sensor 610 comes into contact with the portion 222a when in a state of being deformed. Thus, when the pack 222 is deformed, the detection value detected by the pressure sensor 610 increases. The ECU determines that the pack 222 is deformed when the detected value is no less than a threshold value. Note that the pressure sensor 610 may be in contact with the portion 222a of the pack 222 when in the state of not being deformed. Also, the pressure sensor 610 is included in "sensing unit" according to the present disclosure.

Further, instead of the pressure sensor 610, a distance sensor may be provided at a position facing the portion 222a. The distance sensor can detect change in distance between the distance sensor and the portion 222a due to the expansion of the portion 222a.

In the first and second embodiments described above, an example is illustrated in which the battery is provided with multiple packs 222, but the present disclosure is not limited to this. Just one pack 222 may be provided in the battery. Also, the number of the all-solid-state battery cells 221 sealed in each pack 222 may be one.

Although the embodiments described above illustrate an example in which the ECU determines deformation of packs, the present disclosure is not limited to this. A sensor, such as a camera, a strain gauge, or the like, may perform the above determination, and transmit the determination results to the ECU.

Note that the configurations (processing) of the embodiments and the modifications above may be combined with each other.

The embodiments disclosed herein should be construed as exemplary in all respects and not restrictive. The scope of the present disclosure is set forth in the claims rather than in the above description of the embodiments, and is intended to include all modifications within the meaning and scope equivalent to those of the claims.

## Claims

1. A battery system comprising:
at least one pack (222) in which an all-solid-state battery cell (221) is sealed; and
a sensing unit (150, 240) configured to sense deformation of the at least one pack (222) due to change in internal pressure of the at least one pack (222).

2. The battery system according to claim 1, wherein
the at least one pack (222) includes a plurality of packs; and
the sensing unit (150, 240) is configured to sense deformation of each of the packs.

3. The battery system according to claim 1 or 2, wherein the sensing unit (150, 240) is configured to sense deformation of the at least one pack (222), in a non-contact state with the at least one pack (222).

4. The battery system according to claim 3, wherein:
the sensing unit (150, 240) includes an imaging unit (240); and
the sensing unit (150, 240) is configured to detect deformation of the at least one pack (222), based on an image of the at least one pack (222) imaged by the imaging unit (240).

5. The battery system according to claim 4, wherein:
the at least one pack (222) includes a discharge valve (222b) that is configured to discharge gas when the internal pressure is no lower than a predetermined value; and
the sensing unit (150, 240) is configured to sense deformation of the at least one pack (222) based on the image indicating that the discharge valve (222b) is open.

6. The battery system according to claim 4, wherein:
the at least one pack (222) includes an array of packs arrayed in a predetermined direction; and
the imaging unit (240) is configured to move in the predetermined direction.

7. The battery system according to claim 1 or 2, wherein:
the sensing unit includes a strain gauge;
the strain gauge is attached in a state of contact with a portion of the at least one pack (222); and
the portion of the at least one pack (222) is configured to deform due to change in the internal pressure.

8. The battery system according to claim 1 or 2, wherein:
the sensing unit includes a pressure sensor;
the pressure sensor is provided in a portion of the at least one pack (222); and
the portion of the at least one pack (222) is configured to deform due to change in the internal pressure.

9. An abnormality sensing method for a battery system equipped with an all-solid-state battery cell (221), the abnormality sensing method comprising:
preparing a pack (222) in which the all-solid-state battery cell (221) is sealed; and sensing deformation of the pack (222) due to change in internal pressure of the pack (222).
